# EUROPÄISCHE PATENTSCHRIFT

(11) **EP 2 212 101 B1**
(45) Veröffentlichungstag und Bekanntmachung des Hinweises auf die Patenterteilung: **20.02.2013**
(21) Anmeldenummer: 08804287.4
(22) Anmeldetag: 17.09.2008
(51) Int. Cl.: B29C 73/16

(54) **VORRICHTUNG MIT EINER STECKVERBINDUNG ZUM ABDICHTEN UND AUFPUMPEN AUFBLASBARER GEGENSTÄNDE**
APPARATUS COMPRISING A PLUG-IN CONNECTION FOR SEALING AND PUMPING UP INFLATABLE OBJECTS
DISPOSITIF À RACCORD ENFICHABLE POUR FERMER HERMÉTIQUEMENT ET GONFLER DES OBJETS GONFLABLES

(30) Priorität: 21.11.2007 DE 102007055435
(43) Veröffentlichungstag der Anmeldung: 04.08.2010
(73) Patentinhaber: Continental Reifen Deutschland GmbH, 30165 Hannover (DE)
(72) Erfinder: GERLACH, Markus, 31078 Grünenplan (DE); DETERING, Rainer, 30926Seelze (DE); YANG, Zheng, 30171 Hannover (DE)
(74) Vertreter: Finger, Karsten
(86) Internationale Anmeldenummer: PCT/EP2008/062332
(87) Internationale Veröffentlichungsnummer: WO 2009/065636

(56) Entgegenhaltungen:
- EP-A- 1 291 158
- DE-A1- 10 106 468
- DE-U1- 20 212 101
- US-A- 4 765 367

## Beschreibung

Die Erfindung betrifft eine Vorrichtung zum Abdichten und Aufpumpen aufblasbarer Gegenstände, wobei die Vorrichtung eine in einem Gehäuse angeordnete Druckgasquelle, einen Behälter für ein in den aufblasbaren Gegenstand einfüllbares selbsttätiges Dichtmittel, eine Ventil- und Verteilereinheit für Dichtmittel und Druckgas umfasst und die Ventil- und Verteilereinheit mit einer an die Druckgasquelle anschließbaren Einlassleitung und einer an den aufblasbaren Gegenstand anschließbaren Auslassleitung versehen ist.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Die Bedienung solcher Reparatursätze ist aber auch nicht ganz einfach, insbesondere dann, wenn je nach Betriebszustand zunächst Dichtmittelbehälter und diverse Schlauchverbindungen angeschlossen oder umgebaut werden müssen. Die meisten Reparatursätze sind nämlich auch gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle. Wenn dies dann aber doch geschieht, befindet sich der Nutzer in ungewohnter und ungeübter Situation.

Zur Erleichterung der Handhabung der Geräte/Reparatursätze in solchen unterschiedlichen Anwendungen sind im Stand der Technik bereits Lösungen bekannt, die im Wesentlichen ein vereinfachtes Umschalten von der einen auf die andere Betriebsart beinhalten. Auch existieren Lösungen mit Steckverbindungen zwischen einzelnen Teilen der Geräte/Reparatursätze.

So offenbart die DE 101 06 468 A1 eine Vorrichtung gemäß dem Oberbegriff des Anspruchs 1 zum Ausbringen von Reifendichtmittel aus einem Behälter, wobei dem Behälter ein Entnahmeelement mit einem Ventil zugeordnet ist, welches zum Ausbringen von Reifendichtmittel dient. Das Ventil ist dabei als Ein- oder Mehrwegeventil ausgebildet und weist einen schaltbaren Bypass auf, beispielsweise zu betätigen durch einen Drehschalter, so dass in einer Schaltstellung eine Druckgasquelle direkt mit dem Reifen oder dem aufzublasenden Gegenstand verbunden werden kann. In einer anderen Schaltstellung ist eine Verbindung zwischen Druckgasquelle (Einlass), Dichtmittelbehälter und aufzublasenden Gegenstand (Auslass) möglich. Es kann also eine Umschaltung zwischen den Betriebszuständen "nur Aufpumpen" und "Pumpen mit Dichtmittel" vorgenommen werden, ohne Schlauchverbindungen zu wechseln oder Umbauten an dem Gerät vorzunehmen. Das hier offenbarte Ventil ist zwar einfach aufgebaut, jedoch wenig robust und kann ggf. leicht verkleben. Außerdem wird zum sicheren Verschluss des Dichtmittelbehälters bei Transport und im Betriebszustand "nur Aufpumpen" ein zusätzliche Versiegelung benötigt.

Die DE 201 15 003 U1 offenbart ein Abdichtsystem, bei dem das Gehäuse der Gasdruckquelle einen Kopplungsabschnitt ausweist, an dem eine Dichtmittelbehälter zur Herstellung des Benutzungszustandes form- und/oder kraftschlüssig so koppelbar ist, dass das Gehäuse der Gasdruckquelle als Standfuß für den Dichtmittelbehälter dient. Die hier realisierte steckbare Verbindung erzeugt jedoch keine Erleichterung bei der Herstellung der verschiedenen Schlauchverbindungen. Bei durch einen Kompressormotor erzeugten Vibrationen kann sich nachteiligerweise der Dichtmittelbehälter auch aus der Verbindung mit dem Standfuß lösen.

Die DE 2020 12 101 U1 offenbart eine Vorrichtung zum Aufpumpen und/oder Abdichten aufblasbarer Gegenstände mit einer Anschlusseinheit, bei der für den Fall, dass der Aufblasbare Gegenstand ohne Zugabe eines Dichtmittels lediglich aufgepumpt werden soll, eine Anschlusseinheit für den Behälter mit Dichtmittel mit einem lösbaren Deckel verschlossen wird.

Für die Erfindung bestand also die Aufgabe, eine Vorrichtung zum Abdichten und Aufpumpen aufblasbarer Gegenstände bereitzustellen, die eine sichere Verbindung zwischen Dichtmittelbehälter bzw. Ventil- und Verteilereinheit bereitstellt, die ein vereinfachtes Umschalten von der einen auf die andere Betriebsart erlaubt, keine zusätzlichen Dichtmaßnahmen des Behälterausgangs erfordert, die sicher zu handhaben ist, eine robuste Ausführung aufweist und dazu einfach und preisgünstig herzustellen ist. Gelöst wird diese Aufgabe durch die Merkmale des Hauptanspruchs. Weitere vorteilhafte Ausbildungen sind in den Unteransprüchen offenbart.

Dabei ist die die Einlassleitung als profilierter Formkörper ausgebildet und über eine am Gehäuse der Druckgasquelle angeordnete und komplementär zur Profilierung des Formkörpers ausgebildete Aufnahme in Form einer Steckverbindung an die Druckgasquelle angeschlossen, wobei die Steckverbindung durch ein von der Außenseite des Gehäuses einschiebbares Sicherungselement gegen ein Lösen der Steckverbindung verschließbar ist. Mit einer solchen Ausbildung ist sowohl die gesicherte Verbindung zur Druckquelle hergestellt als auch die Standfestigkeit und die Betriebssicherheit erhöht.

Eine vorteilhafte, weil einfach herzustellende Ausbildung besteht darin, dass die Einlassleitung im Wesentlichen als profilierter, rohrförmiger Körper ausgebildet ist.

Eine vorteilhafte Ausbildung besteht darin, dass das Sicherungselement als ein mit der Profilierung des Formkörpers und der Aufnahme zusammenwirkender einschiebbarer Sicherungsstift oder Sicherungsbügel ausgebildet ist. So lässt sich mit wenigen Handgriffen die Vorrichtung in ihren Betriebszustand versetzen. Dies gilt ebenso für eine vorteilhafte Ausbildung, die darin besteht, dass das Sicherungselement als Sicherungsbügel U-förmig ausgebildet ist, wobei die Schenkel des U-förmigen Sicherungsbügels mit der Profilierung des Formkörpers und der Aufnahme zusammenwirken. Durch einen solchen U-förmigen Sicherungsbügel erfolgt an zwei in der Regel gegenüberliegenden Stellen der Profilierung des Formkörpers und der Aufnahme ein Blockieren bzw. Verschließen der Steckverbindung, wodurch das Lösen, d.h. das "auseinander nehmen" verhindert wird.

Eine weitere vorteilhafte Ausbildung besteht darin, dass die Ventil- und Verteilereinheit einen in einem Ventilgehäuse um seine Längsachse verdrehbaren Ventilkörper aufweist, der zwischen zwei Schaltpositionen so verdrehbar ist, das in der ersten Schaltposition eine Verbindung zwischen der mit der Einlassleitung verbundene Druckgasquelle und der Auslaßleitung entsteht und dass in der zweiten Schaltposition eine Verbindung zwischen der mit der Einlassleitung verbundene Druckgasquelle und der mit dem aufblasbaren Gegenstand verbunden Auslaßleitung über den Dichtmittelbehälter entsteht.

Durch eine solche Ausführung ist die Betätigungsvorrichtung für das Umschalten zwischen den Betriebszuständen "nur Aufpumpen" und "Pumpen mit Dichtmittel" besonders robust und einfach aufgebaut. Die Benutzung ist zudem sehr sicher und hinreichend komfortabel, obwohl eine einfache und preiswerte Herstellung möglich ist.

Eine weitere vorteilhafte Ausbildung besteht darin, dass der Ventilkörper in der ersten Schaltposition den Dichtmittelbehälter dichtend abschließt und einen ersten Durchlass zwischen der mit der Einlassleitung verbundene Druckgasquelle und der Auslaßleitung herstellt und in der zweiten Schaltposition den ersten Durchlass zwischen der Einlassleitung und der Auslaßleitung dichtend abschließt und einen zweiten Durchlass zwischen der mit der Einlassleitung verbundene Druckgasquelle und dem Dichtmittelbehälter sowie zwischen Dichtmittelbehälter und der mit dem aufblasbaren Gegenstand verbunden Auslaßleitung herstellt.

Durch diese Ausführung sind alle wesentlichen Schaltfunktionen an die Drehung des Ventilkörpers gekoppelt, wodurch nur ein Teil in besonderer Weise zur Abdichtung ausgebildet werden muss.

Eine weitere vorteilhafte Ausbildung besteht darin, dass der erste und/oder der zweite Durchlass mindestens teilweise durch einen im Ventilkörper angeordneten Bypass erzeugt werden. Dadurch lassen sich die Strömungsquerschnitte besonders gut anpassen.

Eine weitere vorteilhafte Ausbildung besteht darin, dass der Ventilkörper durch eine Drehbewegung eines am Ventilgehäuse angeordneten Drehknopfes um seine Längsachse verdrehbar ist. Drehknöpfe sind einfach zu bedienen und können leicht mit Markierungen oder Rasten versehen werden, die sichere und eindeutige Schaltstellungen kennzeichnen.

Eine weitere vorteilhafte Ausbildung besteht darin, dass der Drehknopfes um einen mit dem Ventilgehäuse verbundenen Grundkörper drehbar ist, wobei der Drehknopf und der Grundkörper über ein mit Drehknopf und Grundkörper zusammenwirkendes und von außen einschiebbares Sicherungselement gegen eine Relativdrehung verschlossen ist. Mit einer solchen Ausbildung ist eine gesicherte Stellung des Drehknopfes erreichbar, die nur bewusst wieder gelöst bzw. verändert werden kann.

Eine weitere vorteilhafte Ausbildung besteht darin, dass der Dichtmittelbehälter mit der Ventil- und Verteilereinheit lösbar verbunden ist, wodurch ein einfacher Austausch nach dem Dichtmittelpumpen erfolgen kann. Dabei besteht eine ebenso einfache wie vorteilhafte Weiterbildung darin, dass die Ventil- und Verteilereinheit mit dem Dichtmittelbehälter verschraubt ist.

Eine weitere vorteilhafte Ausbildung besteht darin, dass der Dichtmittelbehälter in Flaschenform ausgebildet ist und die Ventil- und Verteilereinheit am Flaschenhals mit Dichtmittelbehälter verschraubt ist. Hiermit kann eine "Dichtmittelflasche" als gängiges Massenprodukt für die Vorrichtung genutzt werden.

Eine besonders günstige und sichere Handhabung ergibt sich dadurch, dass der Dichtmittelbehälter im Betriebszustand auf seiner unteren Grundfläche steht und die oberhalb der Grundfläche angeordnete Ventil- und Verteilereinheit ein in den Dichtmittelbehälter hineinragendes und bis unter den Dichtmittelspiegel reichendes Steigrohr aufweist. Die Ventil- und Verteilereinheit steht damit bei den üblichen Vorrichtungen solcher Art auf einer Arbeitshöhe, bei der sich nach vorliegenden Erfahrungen bis zu 145 mm an zusätzlichen Verbindungsschläuchen / Schlauchführungen einsparen lassen. Zudem ist die Handhabung bei "stehendem Dichtmittelbehälter" ungleich einfacher.

Eine weitere vorteilhafte Weiterbildung besteht darin, dass das Steigrohr an den Ventilkörper angeschlossen, also quasi als dessen Verlängerung ausgebildet ist. Dies begünstigt eine einfache Modul-Herstellung.

Anhand eines Ausführungsbeispieles soll die Erfindung näher erläutert werden. Es zeigen
- Fig. 1: eine prinzipielle Darstellung einer erfindungsgemäßen Vorrichtung mit der zugehörige Ventil- und Verteilereinheit in einer Ansicht
- Fig. 2: eine prinzipielle Darstellung einer erfindungsgemäßen Vorrichtung mit dem zugehörigen Sicherungselement im Teil-Schnitt
- Fig. 3: eine Schnittdarstellung einer erfindungsgemäßen Vorrichtung mit dem zugehörigen Sicherungselement und der Ventil- und Verteilereinheit in einer ersten Schaltstellung
- Fig. 4: Schnittdarstellungen einer erfindungsgemäßen Vorrichtung mit dem zugehörigen Ventil- und Verteilereinheit in einer ersten Schaltstellung, jedoch in um 90° versetzten Schnitten

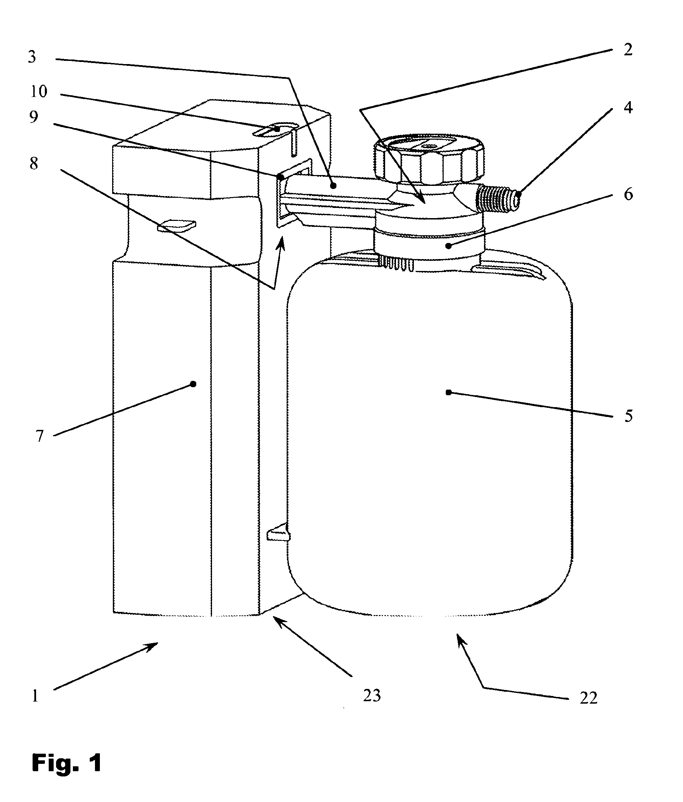

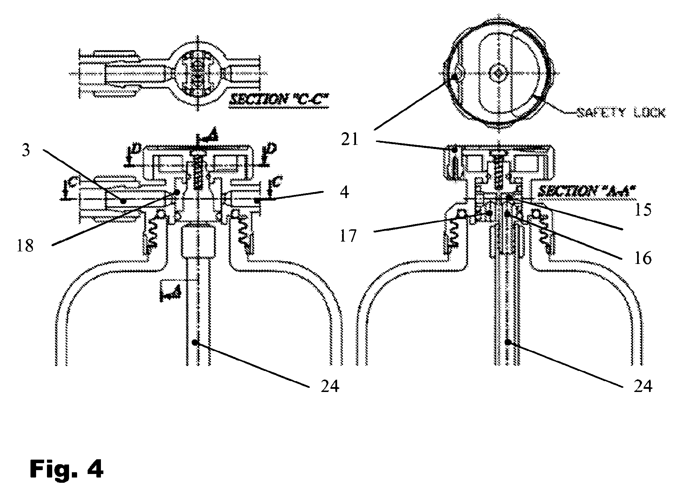

Die Fig. 1 bis 4 sind zum besseren Verständnis in der Zusammenschau zu betrachten.

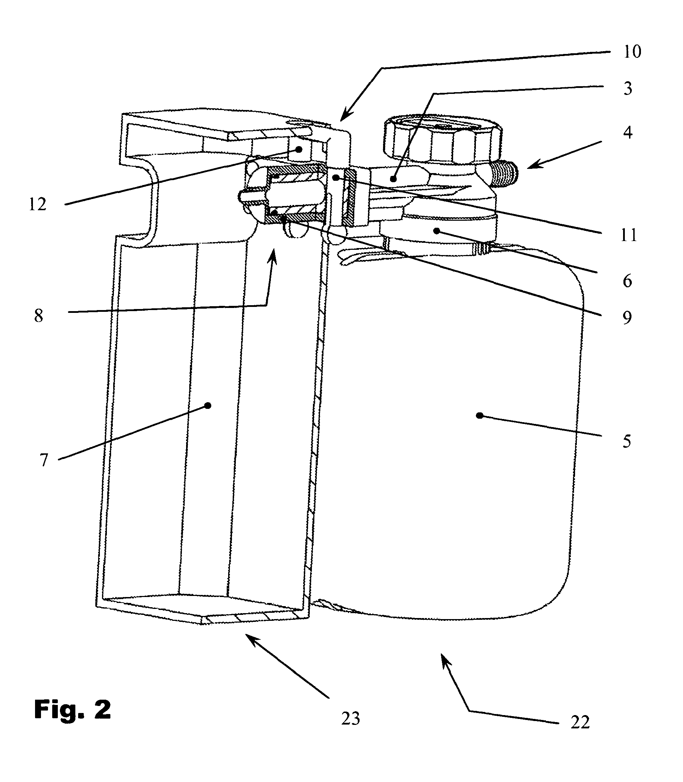

Die Fig. 1 und 2 zeigen eine prinzipielle Darstellung einer erfindungsgemäßen Vorrichtung 1 zum Abdichten und Aufpumpen von Kraftfahrzeugreifen, wobei die Vorrichtung eine hier nicht näher dargestellte Druckgasquelle aufweist, die an die Ventil- und Verteilereinheit 2 über eine Einlassleitung 3 angeschlossen ist. Die Ventil- und Verteilereinheit 2 weist eine an den ebenfalls hier nicht näher dargestellten aufblasbaren Gegenstand anschließbaren Auslaßleitung 4 auf. Die Einlassleitung 3 ist dabei, wie in Fig. 1 gezeigt, als profilierter, rohrförmiger Formkörper ausgebildet.

Ein flaschenförmiger Dichtmittelbehälter 5 für ein in den aufblasbaren Gegenstand einfüllbares selbsttätiges Dichtmittel ist über ein Schraubgewinde 6 mit der Ventil- und Verteilereinheit 2 lösbar verschraubt.

Die Vorrichtung 1 umfasst ein Gehäuse 7 für die Druckgasquelle. An dem Gehäuse 7 der Druckgasquelle ist eine Steckverbindung 8 ausgebildet, welche aus einer komplementär zur Profilierung des Formkörpers ausgebildete Aufnahme 9 und eben der Einlassleitung 3 besteht, die in ihrem weiteren Verlauf die Druckgasquelle angeschlossen ist.

Die Steckverbindung 8 beinhaltet ein Sicherungselement, welches als ein mit der Profilierung des Formkörpers und der Aufnahme zusammenwirkender einschiebbarer Sicherungsbügel 10 ausgebildet ist. Der Sicherungsbügel ist U-förmig ausgebildet, wobei die gegenüberliegenden Schenkel 11 und 12 des U-förmigen Sicherungsbügels mit der Profilierung des Formkörpers und der Aufnahme zusammenwirken.

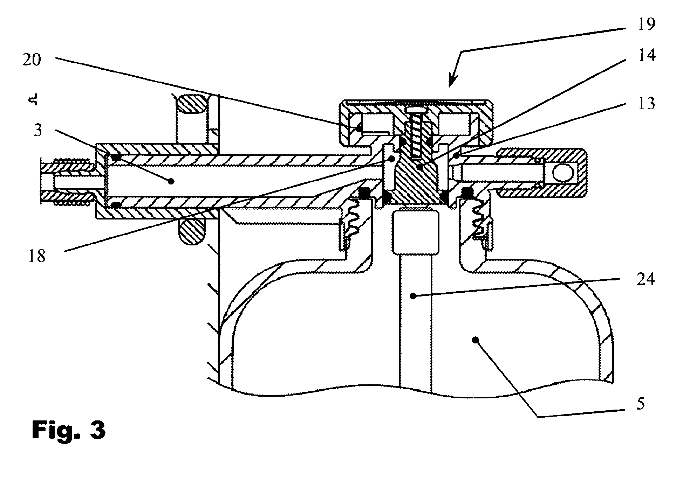

Die Ventil- und Verteilereinheit 2 weist einen in einem Ventilgehäuse 13 um seine Längsachse verdrehbaren Ventilkörper 14 aufweist, der zwischen zwei Schaltpositionen so verdrehbar ist, das in der ersten Schaltposition eine Verbindung zwischen der mit der Einlassleitung 3 verbundene Druckgasquelle und der Auslaßleitung 4 entsteht, wie dies in der Fig. 2 und in der linken Schnittdarstellung der Fig. 3 dargestellt ist. In der zweiten Schaltposition ist der Ventilkörper so verdrehbar, dass eine Verbindung zwischen der mit der Einlassleitung 3 verbundene Druckgasquelle und der mit dem aufblasbaren Gegenstand verbunden Auslaßleitung 4 über den Dichtmittelbehälter 5 entsteht. Die zweite Schaltposition erkennt man in der rechten Schnittdarstellung der Fig. 3, die die im Ventilkörper 9 befindlichen Kanäle 15, 16 und 17darstellt

In der ersten Schaltposition schließt also der Ventilkörper 9 den Dichtmittelbehälter 5 dichtend ab und stellt einen Durchlass 18 zwischen der mit der Einlassleitung 3 verbundenen Druckgasquelle und der Auslaßleitung 4 her. In der zweiten Schaltposition schließt der Ventilkörper 9 den ersten Durchlass 18 zwischen der Einlassleitung und der Auslaßleitung dichtend ab und schaltet einen zweiten Durchlass über die Kanäle 15,16 und 17 zwischen der mit der Einlassleitung 3 verbundene Druckgasquelle und dem Dichtmittelbehälter 5 sowie zwischen Dichtmittelbehälter 5 und der mit dem aufblasbaren Gegenstand verbunden Auslaßleitung 4 herstellt.

Der Ventilkörper 9 ist dabei durch eine Drehbewegung eines am Ventilgehäuse 13 angeordneten Drehknopfes 19 um seine Längsachse verdrehbar. Das Ventilgehäuse 13 bildet dabei einen mit letzterem einstückig verbundenen Grundkörper 20, um den der Drehknopf drehbar ist und geführt wird.

Der Drehknopf 19 und der Grundkörper 20 sind über ein mit Drehknopf und Grundkörper zusammenwirkendes und von außen einschiebbares Sicherungselement 21 gegen eine Relativdrehung miteinander verschlossen.

Die Ventil- und Verteilereinheit 2 ist in dieser Ausführung mit dem Dichtmittelbehälter 5 lösbar verbunden, nämlich verschraubt, wobei der Dichtmittelbehälter 5 in Flaschenform ausgebildet ist und die Ventil- und Verteilereinheit 2 am Flaschenhals mit dem Dichtmittelbehälter 5 verschraubt ist.

Der Dichtmittelbehälter 5 steht im Betriebszustand auf seiner Grundfläche 22, ggf. weiter abgestützt durch eine zweite Standfläche, nämlich die Grundfläche 23 des Gehäuses 7. Die oberhalb der Grundfläche 22 angeordnete Ventil- und Verteilereinheit 2 weist ein in den Dichtmittelbehälter 5 hineinragendes und bis unter den Dichtmittelspiegel reichendes Steigrohr 24 aufweist. Das Steigrohr ist an den Ventilkörper 9 angeschlossen.

### Bezugszeichenliste

### (Teil der Beschreibung)

- 1: Vorrichtung zum Abdichten und Aufpumpen
- 2: Ventil- und Verteilereinheit
- 3: Einlassleitung
- 4: Auslassleitung
- 5: Dichtmittelbehälter
- 6: Schraubgewinde
- 7: Gehäuse
- 8: Steckverbindung
- 9: Aufnahme
- 10: Sicherungsbügel
- 11: Schenkel
- 12: Schenkel
- 13: Ventilgehäuse
- 14: Ventilkörper
- 15: Kanal
- 16: Kanal
- 17: Kanal
- 18: Durchlass
- 19: Drehknopf
- 20: Grundkörper
- 21: Sicherungselement
- 22: Grundfläche des Dichtmittelbehälters
- 23: Grundfläche des Gehäuses
- 24: Steigrohr

## Patentansprüche

1. Vorrichtung zum Abdichten und Aufpumpen aufblasbarer Gegenstände, wobei die Vorrichtung (1) eine in einem Gehäuse angeordnete Druckgasquelle, einen Behälter (5) für ein in den aufblasbaren Gegenstand einfüllbares selbsttätiges Dichtmittel, eine Ventil- und Verteilereinheit (2) für Dichtmittel und Druckgas umfasst und die Ventil- und Verteilereinheit (2) mit einer an die Druckgasquelle anschließbaren Einlassleitung (3) und einer an den aufblasbaren Gegenstand anschließbaren Auslassleitung (4) versehen ist, **dadurch gekennzeichnet, dass** die Einlassleitung als profilierter Formkörper ausgebildet und über eine am Gehäuse (7) der Druckgasquelle angeordnete und komplementär zur Profilierung des Formkörpers ausgebildete Aufnahme (9) in Form einer Steckverbindung (8) an die Druckgasquelle angeschlossen ist, wobei die Steckverbindung (8) durch ein von der Außenseite des Gehäuses einschiebbares Sicherungselement (10) gegen ein Lösen der Steckverbindung verschließbar ist.

2. Vorrichtung nach Anspruch 1, **dadurch gekennzeichnet, dass** die Einlassleitung (3) im Wesentlichen als profilierter, rohrförmiger Körper ausgebildet ist.

3. Vorrichtung nach Anspruch 1 oder 2, **dadurch gekennzeichnet, dass** das Sicherungselement als ein mit der Profilierung des Formkörpers und der Aufnahme zusammenwirkender einschiebbarer Sicherungsstift oder Sicherungsbügel (10) ausgebildet ist.

4. Vorrichtung nach Anspruch 3, **dadurch gekennzeichnet, dass** das Sicherungselement als Sicherungsbügel U-förmig ausgebildet ist, wobei die Schenkel (11, 12) des U-förmigen Sicherungsbügels (10) mit der Profilierung des Formkörpers und der Aufnahme zusammenwirken.

5. Vorrichtung nach Anspruch 1 bis 4, **dadurch gekennzeichnet, dass** die Ventil- und Verteilereinheit (2) einen in einem Ventilgehäuse (13) um seine Längsachse verdrehbaren Ventilkörper (9) aufweist, der zwischen zwei Schaltpositionen so verdrehbar ist, das in der ersten Schaltposition eine Verbindung zwischen der mit der Einlassleitung (3) verbundene Druckgasquelle und der Auslaßleitung (4) entsteht und dass in der zweiten Schaltposition eine Verbindung zwischen der mit der Einlassleitung (3) verbundene Druckgasquelle und der mit dem aufblasbaren Gegenstand verbunden Auslaßleitung (4) über den Dichtmittelbehälter (5) entsteht.

6. Vorrichtung nach Anspruch 5, **dadurch gekennzeichnet, dass** der Ventilkörper (9) in der ersten Schaltposition den Dichtmittelbehälter (5) dichtend abschließt und einen ersten Durchlass (18) zwischen der mit der Einlassleitung (3) verbundene Druckgasquelle und der Auslaßleitung (4) herstellt und in der zweiten Schaltposition den ersten Durchlass (18) zwischen der Einlassleitung und der Auslaßleitung dichtend abschließt und einen zweiten Durchlass (15, 16, 17) zwischen der mit der Einlassleitung (3) verbundene Druckgasquelle und dem Dichtmittelbehälter sowie zwischen Dichtmittelbehälter (5) und der mit dem aufblasbaren Gegenstand verbunden Auslaßleitung (4) herstellt.

7. Vorrichtung nach Anspruch 5 oder 6, **dadurch gekennzeichnet, dass** der erste Durchlass (18) als um den oder am Ventilkörper (9) angeordneter Bypass ausgebildet ist und der zweite Durchlass mindestens teilweise durch im Ventilkörper (9) angeordneten Kanäle (15, 16, 17) erzeugt werden.

8. Vorrichtung nach Anspruch 5 bis 7, **dadurch gekennzeichnet, dass** der Ventilkörper (9) durch eine Drehbewegung eines am Ventilgehäuse (13) angeordneten Drehknopfes (19) um seine Längsachse verdrehbar ist.

9. Vorrichtung nach Anspruch 8, **dadurch gekennzeichnet, dass** der Drehknopfes (19) um einen mit dem Ventilgehäuse verbundenen Grundkörper (20) drehbar ist, wobei der Drehknopf und der Grundkörper über mindestens ein mit Drehknopf und Grundkörper zusammenwirkendes und von außen einschiebbares Sicherungselement (21) gegen eine Relativdrehung verschlossen ist.

10. Vorrichtung nach Anspruch 1 bis 9, **dadurch gekennzeichnet, dass** der Dichtmittelbehälter (5) mit der Ventil- und Verteilereinheit (2) lösbar verbunden ist

11. Vorrichtung nach Anspruch 10, **dadurch gekennzeichnet, dass** die Ventil- und Verteilereinheit (2) mit dem Dichtmittelbehälter (5) verschraubt ist.

12. Vorrichtung nach Anspruch 11, **dadurch gekennzeichnet, dass** der Dichtmittelbehälter (5) in Flaschenform ausgebildet ist und die Ventil- und Verteilereinheit (2) am Flaschenhals mit dem Dichtmittelbehälter (5) verschraubt ist.

13. Vorrichtung nach Anspruch 1 bis 12, **dadurch gekennzeichnet, dass** der Dichtmittelbehälter (5) im Betriebszustand auf seiner Grundfläche (22) steht und die oberhalb der Grundfläche angeordnete Ventil- und Verteilereinheit (2) ein in den Dichtmittelbehälter (5) hineinragendes und bis unter den Dichtmittelspiegel reichendes Steigrohr (24) aufweist.

14. Vorrichtung nach Anspruch 13, **dadurch gekennzeichnet, dass** das Steigrohr (24) an den Ventilkörper (9) angeschlossen ist.

## Claims

1. Apparatus for sealing and pumping up inflatable objects, the apparatus (1) comprising a compressed-gas source arranged in a housing, a container (5) for an automatic sealing medium capable of being introduced into the inflatable object, a valve and distributor unit (2) for sealing medium and compressed gas, and the valve and distributor unit (2) being provided with an inlet line (3) connectable to the compressed-gas source and with an outlet line (4) connectable to the inflatable object, **characterized in that** the inlet line is designed as a profiled moulding and is connected to the compressed-gas source via a receptacle (9) in the form of a plug-in connection (8), arranged on the housing (7) of the compressed-gas source and designed complementarily to the profiling of the moulding, the plug-in connection (8) being closable, against release of the plug-in connection, by means of a securing element (10) capable of being pushed in from outside the housing.

2. Apparatus according to Claim 1, **characterized in that** the inlet line (3) is designed essentially as a profiled tubular body.

3. Apparatus according to Claim 1 or 2, **characterized in that** the securing element is designed as a securing pin or securing shackle (10) cooperating with the profiling of the moulding and of the receptacle and capable of being pushed in.

4. Apparatus according to Claim 3, **characterized in that** the securing element, as a securing shackle, is of U-shaped design, the legs (11, 12) of the U-shaped securing shackle (10) cooperating with the profiling of the moulding and of the receptacle.

5. Apparatus according to Claims 1 to 4, **characterized in that** the valve and distributor unit (2) has a valve body (9) which is rotatable in a valve housing (13) about its longitudinal axis and which can be rotated between two switching positions such that, in the first switching position, a connection occurs between the compressed-gas source connected to the inlet line (3) and the outlet line (4), and such that, in the second switching position, a connection occurs between the compressed-gas source connected to the inlet line (3) and the outlet line (4) connected to the inflatable object, by way of the sealing-medium container (5).

6. Apparatus according to Claim 5, **characterized in that** the valve body (9), in the first switching position, sealingly closes off the sealing-medium container (5) and makes a first passage (18) between the compressed-gas source connected to the inlet line (3) and the outlet line (4) and, in the second switching position, sealingly closes off the first passage (18) between the inlet line and the outlet line and makes a second passage (15, 16, 17) between the compressed-gas source connected to the inlet line (3) and the sealing-medium container and between the sealing-medium container (5) and the outlet line (4) connected to the inflatable object.

7. Apparatus according to Claim 5 or 6, **characterized in that** the first passage (18) is designed as a bypass arranged around or on the valve body (9), and the second passage is generated at least partially by ducts (15, 16, 17) arranged in the valve body (9).

8. Apparatus according to Claims 5 to 7, **characterized in that** the valve body (9) can be rotated about its longitudinal axis as a result of a rotational movement of a rotary knob (19) arranged on the valve housing (13).

9. Apparatus according to Claim 8, **characterized in that** the rotary knob (19) is rotatable about a basic body (20) connected to the valve housing, the rotary knob and the basic body being closed against relative rotation via at least one securing element (21) cooperating with the rotary knob and basic body and capable of being pushed in from outside.

10. Apparatus according to Claims 1 to 9, **characterized in that** the sealing-medium container (5) is connected releasably to the valve and distributor unit (2).

11. Apparatus according to Claim 10, **characterized in that** the valve and distributor unit (2) is screwed to the sealing-medium container (5).

12. Apparatus according to Claim 11, **characterized in that** the sealing-medium container (5) is designed in the form of a bottle and the valve and distributor unit (2) is screwed to the sealing-medium container (5) at the bottle neck.

13. Apparatus according to Claims 1 to 12, **characterized in that** the sealing-medium container (5), in the operating state, stands on its base (22), and the valve and distributor unit (2) arranged above the base has a riser pipe (24) projecting into the sealing-medium container (5) and reaching to below the sealing-medium level.

14. Apparatus according to Claim 13, **characterized in that** the riser pipe (24) is connected to the valve body (9).

## Revendications

1. Dispositif pour étanchéifier et pomper des objets gonflables, le dispositif (1) comprenant une source de gaz sous pression disposée dans un boîtier, un récipient (5) pour un milieu d'étanchéité autonome pouvant être introduit dans l'objet gonflable, une unité de soupape et de distribution (2) pour le milieu d'étanchéité et un gaz sous pression, et l'unité de soupape et de distribution (2) étant pourvue d'une conduite d'entrée (3) pouvant être raccordée à la source de gaz sous pression et d'une conduite de sortie (4) pouvant être raccordée à l'objet gonflable, **caractérisé en ce que** la conduite d'entrée est réalisée sous forme de corps moulé profilé et est raccordée à la source de gaz sous pression par le biais d'un logement (9) disposé au niveau du boîtier (7) de la source de gaz sous pression et réalisé de manière complémentaire au profilage du corps moulé sous la forme d'une conduite enfichable (8), la conduite enfichable (8) pouvant être fermée par un élément de fixation (10) pouvant être introduit depuis le côté extérieur du boîtier, pour empêcher un desserrage de la connexion enfichable.

2. Dispositif selon la revendication 1, **caractérisé en ce que** la conduite d'entrée (3) est réalisée essentiellement sous forme de corps tubulaire profilé.

3. Dispositif selon la revendication 1 ou 2, **caractérisé en ce que** l'élément de fixation est réalisé sous forme d'une goupille de fixation ou d'un étrier de fixation (10) pouvant être enfoncé(e) et coopérant avec le profilage du corps moulé et avec le logement.

4. Dispositif selon la revendication 3, **caractérisé en ce que** l'élément de fixation est réalisé en forme de U sous forme d'étrier de fixation, les branches (11, 12) de l'étrier de fixation en forme de U (10) coopérant avec le profilage du corps moulé et avec le logement.

5. Dispositif selon l'une quelconque des revendications 1 à 4, **caractérisé en ce que** l'unité de soupape et de distribution (2) présente un corps de soupape (9) pouvant tourner autour de son axe longitudinal dans un boîtier de soupape (13), qui peut tourner entre deux positions de commutation de telle sorte que dans la première position de commutation, une connexion entre la source de gaz sous pression connectée à la conduite d'entrée (3) et la conduite de sortie (4) soit établie, et que dans la deuxième position de commutation une connexion entre la source de gaz sous pression connectée à la conduite d'entrée (3) et la conduite de sortie (4) connectée à l'objet gonflable soit établie par le biais du récipient de milieu d'étanchéité (5).

6. Dispositif selon la revendication 5, **caractérisé en ce que** le corps de soupape (9) ferme hermétiquement le récipient de milieu d'étanchéité (5) dans la première position de commutation, et établit un premier passage (18) entre la source de gaz sous pression connectée à la conduite d'entrée (3) et la conduite de sortie (4), et dans la deuxième position de commutation, ferme hermétiquement le premier passage (18) entre la conduite d'entrée et la conduite de sortie, et établit un deuxième passage (15, 16, 17) entre la source de gaz sous pression connectée à la conduite d'entrée (3) et le récipient de milieu d'étanchéité et entre le récipient de milieu d'étanchéité (5) et la conduite de sortie (4) connectée à l'objet gonflable.

7. Dispositif selon la revendication 5 ou 6, **caractérisé en ce que** le premier passage (18) est réalisé sous forme de dérivation disposée autour du corps de soupape (9) ou sur lui, et le deuxième passage peut être produit au moins en partie par des canaux (15, 16, 17) disposés dans le corps de soupape (9).

8. Dispositif selon l'une quelconque des revendications 5 à 7, **caractérisé en ce que** le corps de soupape (9) peut tourner autour de son axe longitudinal par un mouvement de rotation d'un bouton tournant (19) disposé sur le boîtier de soupape (13).

9. Dispositif selon la revendication 8, **caractérisé en ce que** le bouton tournant (19) peut tourner autour d'un corps de base (20) connecté au boîtier de soupape, le bouton tournant et le corps de base étant fermés par le biais d'au moins un élément de fixation (21) coopérant avec le bouton tournant et le corps de base et pouvant être enfoncé depuis l'extérieur, pour empêcher une rotation relative.

10. Dispositif selon l'une quelconque des revendications 1 à 9, **caractérisé en ce que** le récipient de milieu d'étanchéité (5) est connecté de manière desserrable à l'unité de soupape et de distribution (2).

11. Dispositif selon la revendication 10, **caractérisé en ce que** l'unité de soupape et de distribution (2) est vissée au récipient de milieu d'étanchéité (5).

12. Dispositif selon la revendication 11, **caractérisé en ce que** le récipient de milieu d'étanchéité (5) est réalisé sous forme de bouteille et l'unité de soupape et de distribution (2) est vissée sur le col de la bouteille au récipient de milieu d'étanchéité (5).

13. Dispositif selon l'une quelconque des revendications 1 à 12, **caractérisé en ce que** le récipient de milieu d'étanchéité (5) est posé sur sa surface de base (22) dans l'état de fonctionnement, et l'unité de soupape et de distribution (2) disposée au-dessus de la surface de base présente un tube montant (24) pénétrant dans le récipient de milieu d'étanchéité (5) et s'étendant jusqu'en dessous du niveau de milieu d'étanchéité.

14. Dispositif selon la revendication 13, **caractérisé en ce que** le tube montant (24) est raccordé au corps de soupape (9).
